# EUROPÄISCHE PATENTSCHRIFT

(11) **EP 2 551 828 B1**
(45) Veröffentlichungstag und Bekanntmachung des Hinweises auf die Patenterteilung: **27.09.2017**
(21) Anmeldenummer: 12176055.7
(22) Anmeldetag: 12.07.2012
(51) Int. Cl.: G06F 21/44, H04L 29/06, H04W 12/06, B60R 25/00, G07C 5/00, H04L 9/08, H04L 29/08

(54) **Verfahren und System zur Kontrolldatenübertragung zwischen einem Fahrzeugdatenaufzeichnungsgerät und einem Prüfgerät**
Method and system for monitoring data transfer between a vehicle data recording device and a test device
Procédé et système de transmission de données de contrôle entre un appareil d'enregistrement de données de véhicule et un appareil de contrôle

(30) Priorität: 29.07.2011 DE 102011108775
(43) Veröffentlichungstag der Anmeldung: 30.01.2013
(73) Patentinhaber: Continental Automotive GmbH, 30165 Hannover (DE)
(72) Erfinder: Schmidt, Gunnar, 78052 Villingen-Schwenningen (DE)

(56) Entgegenhaltungen:
- EP-A1- 1 850 255
- US-A1- 2005 129 242
- US-A1- 2006 190 730
- US-A1- 2009 119 759

## Beschreibung

Die Erfindung bezieht sich auf ein Verfahren zur Kontrolldatenübertragung zwischen einem in einem Kraftfahrzeug angeordneten Fahrzeugdatenaufzeichnungsgerät und einem außerhalb des Kraftfahrzeugs angeordneten Prüfgerät. Außerdem bezieht sich die Erfindung auf ein System zur Durchführung des vorgenannten Verfahrens mit einem in einem Kraftfahrzeug angeordneten Fahrzeugdatenaufzeichnungsgerät und einem außerhalb des Kraftfahrzeugs angeordneten Prüfgerät.

Ein vorgenanntes Fahrzeugdatenaufzeichnungsgerät ist zum Beispiel als Tachograph in einem Lastkraftwagen bekannt. In dem Tachographen sind Fahrzeug- und Fahrerdaten gespeichert, die von Ordnungsbehörden zu Kontrollzwecken mittels eines Prüfgerätes auslesbar und auswertbar sind. Dazu werden die zu kontrollierenden Daten, im Folgenden als Kontrolldaten bezeichnet, aus dem Tachographen auf einen lösbar mit dem Tachographen verbundenen mobilen Datenträger, zum Beispiel eine Datenkarte mit einem Speicherchip oder ein sogenannter Speicher-Stick, insbesondere USB-Stick, übertragen. Sind die Kontrolldaten auf den mobilen Datenträger übertragen, wird dieser vom Tachographen getrennt, aus dem Lastkraftwagen entnommen und mit dem Prüfgerät verbunden. Das Prüfgerät liest daraufhin die Kontrolldaten aus dem mobilen Datenträger aus und wertet sie aus.

Aus Druckschrift US 2006 / 0 190 730 A1 ist eine Einbindung eines Clients in ein Netzwerk bekannt. In diesem Zusammenhang beschäftigt sich diese Druckschrift mit einem Authentifizieren des Clients in dem Netzwerk, wobei ein Server des Netzwerks einen Zufallszahlengenerator aufweist.

Aufgabe der Erfindung ist es, ein Verfahren der eingangs genannten Art anzugeben, das einfach durchführbar ist und eine hohe Sicherheit bei der Datenübertragung bietet. Darüber hinaus liegt der Erfindung die Aufgabe zugrunde, ein System zu schaffen, mit welchem ein solches Verfahren durchführbar ist.

Die erstgenannte Aufgabe wird mit einem Verfahren nach Anspruch 1 gelöst.

In den Unteransprüchen sind vorteilhafte Ausgestaltungen des erfindungsgemäßen Verfahrens angegeben.

Von besonderem Vorteil ist bei der Erfindung die Nutzung des Zufallscodes als Verbindungsidentifikationskennung. Damit ist ein besonders hoher Schutz gegen Manipulation vorhanden, wobei gleichzeitig eine schnelle und unkomplizierte Kontrolle von Fahrzeug- und Fahrerdaten des Fahrzeugdatenaufzeichnungsgeräts durch eine Prüfperson einer Ordnungsbehörde ermöglicht ist. Dabei kann die Prüfperson die Kontrolle vorteilhaft vor Ort in unmittelbarer Nähe des Kraftfahrzeugs vornehmen, ohne dass das Kraftfahrzeug von der Prüfperson betreten werden muss. Auch eine grundsätzlich vorstellbare, aufwendige Kabelverbindung zwischen Fahrzeugdatenaufzeichnungsgerät und Prüfgerät ist mit der Erfindung nicht nötig. Dennoch wird mit dem erfindungsgemäßen Verfahren aufgrund der verwendeten Kurzstreckentechnologie für die Kurzstreckenfunkverbindung vorteilhaft eine direkte Verbindung zwischen Fahrzeugdatenaufzeichnungsgerät und Prüfgerät hergestellt und verwendet. Eine aufwendige Sicherheitsstruktur, die über die unmittelbar in das Verfahren einbezogenen Geräte Fahrzeugdatenaufzeichnungsgerät und Prüfgerät hinausgeht, erfordert die Erfindung vorteilhaft nicht. Der Zufallscode dient bei der Erfindung als gemeinsames Geheimnis von Fahrzeugdatenaufzeichnungsgerät und Prüfgerät; auf Basis des Zufallscodes können sich die beiden genannten Geräte authentifizieren, und es können auf dieser Basis zum Beispiel weitere, kryptographische Schlüssel generiert werden, um eine verschlüsselte Kontrolldatenübertragung herzustellen. Der Zufallscode wird an das jeweils andere, das heißt das den Zufallscode nicht-generierende Gerät, nicht über die Funkverbindung übermittelt, sondern beispielsweise mittels akustischer Übermittlung oder zum Beispiel mittels optischer Übermittlung.

Das Fahrzeugdatenaufzeichnungsgerät kann zum Beispiel ein Tachograph, aber auch jedes andere beliebige fahrzeuggebundene Datenaufzeichnungsgerät, das Fahrer- und/oder Fahrzeugdaten aufzeichnet, sein. Die Verbindungsidentifikationskennung kann in einfacher Weise eine Verbindungsidentifikationsnummer sein. Die erfindungsgemäße Kurzstreckenfunkverbindung ist vorzugsweise eine Bluetooth-Verbindung.

Dem Fahrzeugdatenaufzeichnungsgerät ist eine Geräteidentifikationskennung fest zugeordnet, und die Geräteidentifikationskennung wird vor der Generierung des Zufallscodes an das Prüfgerät zu einem Aufbau der Kurzstreckenfunkverbindung funkübertragen. Dadurch wird sichergestellt, dass die Kurzstreckenfunkverbindung genau zwischen den beiden vorgesehenen Geräten aufgebaut wird. Vorzugsweise kann die Geräteidentifikationskennung eine Geräteidentifikationsnummer sein. Die Geräteidentifikationskennung kann auch einen Bestandteil aufweisen, der das Kraftfahrzeug identifiziert, in dem das Fahrzeugdatenaufzeichnungsgerät angeordnet ist. Bei mehreren in der Nähe des Prüfgerätes vorhandenen Fahrzeugdatenaufzeichnungsgeräten kann das zur Überprüfung vorgesehene Gerät aufgrund seiner Geräteidentifikationskennung gezielt ausgewählt werden.

Die Manipulationssicherheit kann zusätzlich dadurch erhöht werden, dass nach Trennung der Kurzstreckenfunkverbindung die Geräteidentifikationskennung in dem Prüfgerät gelöscht wird.

Gemäß einer vorteilhaften Weiterbildung der Erfindung weist der Zufallscode zwei Codebestandteile auf, wobei einer der Codebestandteile eine Gerätekennung des den Zufallscode generierenden Gerätes und der andere Codebestandteil die Verbindungsidentifikationskennung umfasst. Auf diese Weise wird die Manipulationssicherheit des Verfahrens noch weiter erhöht. Der die Gerätekennung umfassende Codebestandteil kann die Übertragung der dem Fahrzeugdatenaufzeichnungsgerät fest zugeordneten Geräteidentifikationskennung vorteilhaft ersetzen.

Einer anderen vorteilhaften Weiterbildung der Erfindung entsprechend, wird der Zufallscode von dem den Zufallscode generierenden Gerät optisch und/oder akustisch angezeigt. Damit ist auf einfache Weise eine gut erfassbare Anzeige des Zufallscodes ermöglicht.

Von besonderem Vorteil ist es, wenn gemäß einer Weiterbildung der Erfindung die optische Anzeige des Zufallscodes durch einen Ausdruck des Zufallscodes mittels eines Druckers erfolgt. Damit können Übermittlungsfehler auf dem Weg zur Eingabe des Zufallscodes in das den Zufallscode nicht-generierende Gerät nahezu ausgeschlossen werden. Der Ausdruck kann beispielsweise in Klartext erfolgen; es ist aber auch denkbar, dass der Ausdruck in Form eines Balken-Codes erfolgt, welcher mittels einer Balken-Code-Lesevorrichtung des den Zufallscode nichtgenerierenden Geräts gelesen wird, wodurch eine sichere und einfache Eingabe des Zufallscodes in das den Zufallscode nicht-generierende Gerät erfolgt.

Auf sichere und einfache Weise kann gemäß einer anderen vorteilhaften Weiterbildung der Erfindung der Zufallscode in das den Zufallscode nicht-generierende Gerät manuell und/oder akustisch eingegeben werden.

Einen weiter gesteigerten, besonders hohen Manipulationsschutz bietet das Verfahren, wenn gemäß einer anderen vorteilhaften Weiterbildung der Erfindung bei nicht-fehlerfreier Kontrolldatenübertragung vor einer erneuten Kontrolldatenübertragung zunächst ein neuer Zufallscode generiert wird. Von besonderem Vorteil ist hierbei, dass eine neue Kontrolldatenübertragung, auch zum Beispiel im Falle einer Wiederholung aufgrund zuvor abgebrochener oder fehlerhafter Übertragungen, immer eine Generierung eines neuen Zufallscodes erfordert.

Die oben zweitgenannte Aufgabe wird mit einem System nach Anspruch 7 gelöst.

In den Unteransprüchen sind vorteilhafte Ausgestaltungen des erfindungsgemäßen Systems angegeben.

Von besonderem Vorteil ist bei dem erfindungsgemäßen System das Vorsehen eines Zufallsgenerators in den beiden Geräten Fahrzeugdatenaufzeichnungsgerät und Prüfgerät sowie die Ausgabeeinrichtung für den Zufallscode in dem den Zufallscode generierenden Gerät und die Eingabevorrichtung für den Zufallscode in dem anderen Gerät, wodurch ein einfacher, eine hohe Manipulationssicherheit unterstützender Systemaufbau erreicht wird.

Von besonderem Vorteil für einen einfachen Systemaufbau ist es, wenn gemäß einer vorteilhaften Weiterbildung der Erfindung vorgesehen ist, dass die Ausgabeeinrichtung eine optische Anzeigevorrichtung, beispielsweise einen Bildschirm, und/oder einen Lautsprecher und/oder einen Drucker aufweist.

Gemäß einer anderen vorteilhaften Weiterbildung der Erfindung weist die Eingabevorrichtung eine Tastatur, die vorteilhaft zum Beispiel als berührungsempfindlicher Bildschirm ausgebildet sein kann, und/oder ein Mikrofon auf. Vorteilhaft könnte die Eingabevorrichtung auch eine optische Lesevorrichtung, beispielsweise eine Balken-Code-Lesevorrichtung zum Lesen eines ausgedruckten Balken-Codes, aufweisen.

Ausführungsbeispiele der Erfindung sind in der Zeichnung dargestellt und werden im Folgenden näher beschrieben. Es zeigen
- Figur 1: ein System mit einem Fahrzeugdatenaufzeichnungsgerät und einem Prüfgerät,
- Figur 2: eine Darstellung eines Verfahrens zu einer Kontrolldatenübertragung zwischen dem Fahrzeugdatenaufzeichnungsgerät und dem Prüfgerät und
- Figur 3: eine Darstellung einer Variante des in Figur 2 dargestellten Verfahren.

Sich jeweils entsprechende Elemente sind in allen Figuren mit gleichen Bezugszeichen versehen.

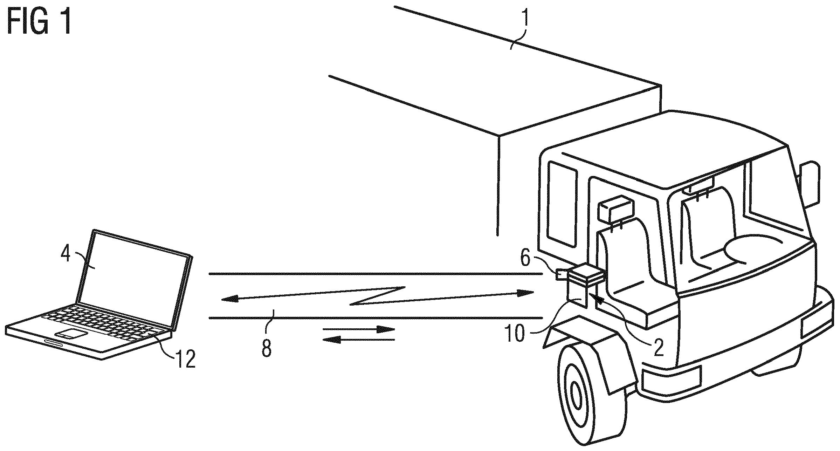

Figur 1 zeigt ein System mit einem in einem Kraftfahrzeug 1 angeordneten Fahrzeugdatenaufzeichnungsgerät 2 und einem außerhalb des Kraftfahrzeugs 1 angeordneten Prüfgerät 4. In diesem Ausführungsbeispiel weist das Fahrzeugdatenaufzeichnungsgerät 2 einen Zufallsgenerator 6 zur Generierung eines Zufallscodes als ein eine Verbindungsidentifikationskennung umfassender Verbindungscode für eine Kurzstreckenfunkverbindung 8, vorzugsweise eine Bluetooth-Verbindung, zwischen dem Fahrzeugdatenaufzeichnungsgerät 2 und dem Prüfgerät 4 auf. Die Kurzstreckenfunkverbindung 8 ist eine bidirektionale Verbindung.

Das Fahrzeugdatenaufzeichnungsgerät 2, das den Zufallscode generiert, weist eine Ausgabeeinrichtung 10 für den Zufallscode auf. Die Ausgabeeinrichtung 10 kann eine optische Anzeigevorrichtung, vorzugsweise einen Bildschirm, zur optischen Anzeige des Zufallscodes oder einen Lautsprecher zur akustischen Anzeige des Zufallscodes oder einen Drucker zum Ausdruck, somit einer speziellen Form einer optischen Anzeige, des Zufallscodes aufweisen, wobei auch Kombinationen möglich sind.

Das Prüfgerät 4, das den Zufallscode nicht generiert, weist eine Eingabevorrichtung 12 für den Zufallscode auf. Die Eingabevorrichtung 12 kann eine Tastatur, die beispielsweise auch als berührungsempfindlicher Bildschirm ausgebildet sein kann, zur manuellen Eingabe oder ein Mikrofon zur akustischen Eingabe des Zufallscodes aufweisen, wobei auch eine Kombination von Mikrofon und Tastatur möglich ist.

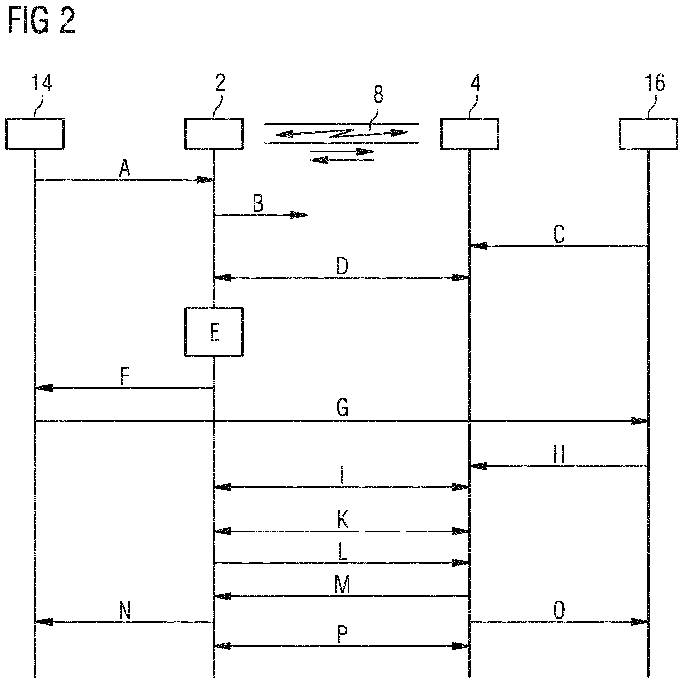

In Figur 2 ist ein Verfahren zur Kontrolldatenübertragung über eine Kurzstreckenfunkverbindung 8 zwischen einem in einem Kraftfahrzeug angeordneten Fahrzeugdatenaufzeichnungsgerät 2 und einem außerhalb des Kraftfahrzeugs angeordneten Prüfgerät 4 dargestellt. Dem Fahrzeugdatenaufzeichnungsgerät 2 ist eine Geräteidentifikationskennung fest zugeordnet. Diese wird auf Anforderung (Pfeil A) eines Fahrers 14 des Kraftfahrzeugs an das Prüfgerät 4 funkübertragen (Pfeil B). Nach Bestätigung (Pfeil C) durch eine Prüfperson 16 ist eine Verbindung (Pfeil D) zwischen dem Fahrzeugdatenaufzeichnungsgerät 2 und dem Prüfgerät 4 aufgebaut.

Daraufhin wird von dem Fahrzeugdatenaufzeichnungsgerät 2 ein Zufallscode als ein eine Verbindungsidentifikationskennung umfassender Verbindungscode generiert (Block E), und der Zufallscode wird dem Fahrer 14 von dem Fahrzeugdatenaufzeichnungsgerät 2 angezeigt (Pfeil F). Der angezeigte Zufallscode wird, in diesem Ausführungsbeispiel von dem Fahrer 14, erfasst und an die Prüfperson 16, beispielsweise verbal, weitergegeben (Pfeil G). Nachfolgend wird der Zufallscode, in diesem Ausführungsbeispiel von der Prüfperson 16, in das Prüfgerät 4 eingegeben (Pfeil H). Erfassung, Weitergabe und Eingabe des Zufallscodes können aber auch automatisch, zum Beispiel mittels eines Übertragungsgeräts, erfolgen.

Nach Eingabe des Zufallscodes erfolgt automatisch eine Koppelung in Form einer Authentifizierung (Pfeil I), auch als Pairing bezeichnet, von Fahrzeugdatenaufzeichnungsgerät 2 und Prüfgerät 4, und es ist zwischen diesen Geräten eine verschlüsselte Funkverbindung (Pfeil K) aufgebaut. Daraufhin werden Kontrolldaten, die insbesondere Fahrerdaten umfassen, von dem Fahrzeugdatenaufzeichnungsgerät 2 zu dem Prüfgerät 4 über die Kurzstreckenfunkverbindung übertragen (Pfeil L). Nach erfolgreicher Übertragung erfolgt eine Meldung (Pfeil M) von dem Prüfgerät 4 an das Fahrzeugdatenaufzeichnungsgerät 2 über die erfolgreiche Übertragung der Kontrolldaten. Dieses wird zudem sowohl dem Fahrer 14 von dem Fahrzeugdatenaufzeichnungsgerät 2 (Pfeil N) als auch der Prüfperson 16 von dem Prüfgerät 4 (Pfeil O) angezeigt.

Nach Beendigung der Kontrolldatenübertragung wird die Kurzstreckenfunkverbindung zwischen dem Fahrzeugdatenaufzeichnungsgerät 2 und dem Prüfgerät 4 getrennt (Pfeil P), und der Zufallscode wird in dem Fahrzeugdatenaufzeichnungsgerät 2 und in dem Prüfgerät 4 gelöscht. Auch die Geräteidentifikationskennung des Fahrzeugdatenaufzeichnungsgeräts 2 wird in dem Prüfgerät 4 nach Trennung der Kurzstreckenfunkverbindung gelöscht.

Bei dem Ausführungsbeispiel nach Figur 2 weist der Zufallscode lediglich einen Codebestandteil, nämlich die Verbindungsidentifikationskennung, auf.

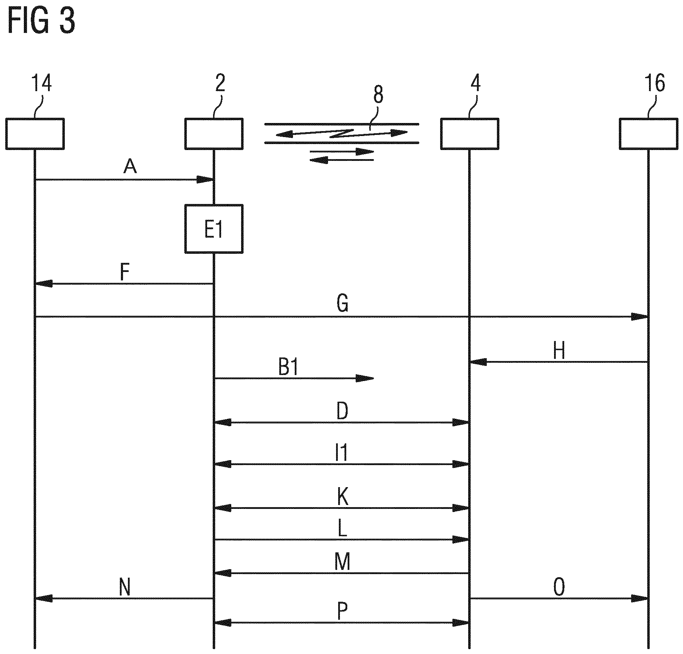

Im Gegensatz dazu weist der Zufallscode bei dem Ausführungsbeispiel nach Figur 3 zwei Codebestandteile auf, wobei einer der Codebestandteile eine Gerätekennung des Fahrzeugdatenaufzeichnungsgeräts 2 und der andere Codebestandteil die Verbindungsidentifikationskennung aufweist. Dieser Zufallscode wird nach Anforderung (Pfeil A) durch den Fahrer 14 von dem Fahrzeugdatenaufzeichnungsgerät 2 generiert (Block E1) und angezeigt (Pfeil F). Erfassung, Weitergabe und Eingabe des Zufallscodes erfolgen wie in dem Ausführungsbeispiel nach Figur 2 und können auch hier automatisch, zum Beispiel mittels eines Übertragungsgeräts, erfolgen.

Nach Eingabe des Zufallscodes in das Prüfgerät 4 folgt eine Einschaltung der Kurzstreckenfunkverbindung zwischen Fahrzeugdatenaufzeichnungsgerät 2 und Prüfgerät 4 auf Grundlage des ersten, die Gerätekennung des Fahrzeugdatenaufzeichnungsgeräts 2 aufweisenden Codebestandteils (Pfeil B1). Nach Aufbau der Verbindung (Pfeil D) erfolgt eine Authentifizierung (Pfeil I1) auf Grundlage des zweiten, die Verbindungsidentifikationskennung aufweisenden Codebestandteils.

In den vorgehend beschriebenen Ausführungsbeispielen wird der Zufallscode als die Verbindungsidentifikationskennung umfassender Verbindungscode jeweils von dem Fahrzeugdatenaufzeichnungsgerät generiert; das Fahrzeugdatenaufzeichnungsgerät ist somit jeweils das den Zufallscode generierende Gerät, das Prüfgerät ist jeweils das den Zufallscode nicht-generierende Gerät.

Die in den Ausführungsbeispielen beschriebenen Verfahren funktionieren aber auch entsprechend, wenn umgekehrt der Zufallscode nicht von dem Fahrzeugdatenaufzeichnungsgerät, sondern von dem Prüfgerät generiert wird. Dann ist das Prüfgerät das den Zufallscode generierende Gerät und das Fahrzeugdatenaufzeichnungsgerät ist das den Zufallscode nicht-generierende Gerät.

## Patentansprüche

1. Verfahren zur Kontrolldatenübertragung zwischen einem in einem Kraftfahrzeug (1) angeordneten Fahrzeugdatenaufzeichnungsgerät (2) und einem außerhalb des Kraftfahrzeugs angeordneten Prüfgerät (4), wobei die Kontrolldaten Fahrerdaten umfassen und in dem Fahrzeugdatenaufzeichnungsgerät gespeichert sind, **dadurch gekennzeichnet,**
- **dass** von dem Fahrzeugdatenaufzeichnungsgerät (2) oder von dem Prüfgerät (4) ein Zufallscode als ein eine Verbindungsidentifikationskennung umfassender Verbindungscode generiert wird,
- **dass** der Zufallscode von dem den Zufallscode generierenden Gerät angezeigt wird,
- **dass** der angezeigte Zufallscode erfasst und in das den Zufallscode nicht-generierende Gerät eingegeben wird,
- **dass** nach der Eingabe des Zufallscodes in das den Zufallscode nicht-generierende Gerät automatisch eine Koppelung über eine Kurzstreckenfunkverbindung (8) zwischen dem den Zufallscode nichtgenerierenden Gerät und dem den Zufallscode generierenden Gerät erfolgt,
- **dass** nachfolgend die Kontrolldaten von dem Fahrzeugdatenaufzeichnungsgerät (2) zu dem Prüfgerät (4) über die Kurzstreckenfunkverbindung (8) übertragen werden,
- **dass** nach Beendigung der Kontrolldatenübertragung die Kurzstreckenfunkverbindung (8) zwischen dem Fahrzeugdatenaufzeichnungsgerät (2) und dem Prüfgerät (4) getrennt wird und
- **dass** nachfolgend der Zufallscode in dem Fahrzeugdatenaufzeichnungsgerät (2) und in dem Prüfgerät (4) gelöscht wird,
wobei dem Fahrzeugdatenaufzeichnungsgerät (2) eine Geräteidentifikationskennung fest zugeordnet ist und wobei die Geräteidentifikationskennung vor der Generierung des Zufallscodes an das Prüfgerät (4) zu einem Aufbau der Kurzstreckenfunkverbindung (8) funkübertragen wird und wobei nach Trennung der Kurzstreckenfunkverbindung (8) die Geräteidentifikationskennung in dem Prüfgerät (4) gelöscht wird.

2. Verfahren nach Anspruch 1, **dadurch gekennzeichnet, dass** der Zufallscode zwei Codebestandteile aufweist, wobei einer der Codebestandteile eine Gerätekennung des den Zufallscode generierenden Gerätes und der andere Codebestandteil die Verbindungsidentifikationskennung umfasst.

3. Verfahren nach einem der vorhergehenden Ansprüche,
**dadurch ekennzeichnet,** dass der Zufallscode von dem den Zufallscode generierenden Gerät optisch und/oder akustisch angezeigt wird.

4. Verfahren nach Anspruch 3, **dadurch gekennzeichnet, dass** die optische Anzeige des Zufallscodes durch einen Ausdruck des Zufallscodes mittels eines Druckers erfolgt.

5. Verfahren nach einem der vorhergehenden Ansprüche,
**dadurch gekennzeichnet, dass** der Zufallscode in das den Zufallscode nicht-generierende Gerät manuell und/oder akustisch eingegeben wird.

6. Verfahren nach einem der vorhergehenden Ansprüche,
**dadurch gekennzeichnet, dass** bei nicht-fehlerfreier Kontrolldatenübertragung vor einer erneuten Kontrolldatenübertragung zunächst ein neuer Zufallscode generiert wird.

7. System zur Durchführung eines Verfahrens nach einem der vorhergehenden Ansprüche mit einem in einem Kraftfahrzeug (1) angeordneten Fahrzeugdatenaufzeichnungsgerät (2) und einem außerhalb des Kraftfahrzeugs angeordneten Prüfgerät (4), **dadurch gekennzeichnet,**
- **dass** das Fahrzeugdatenaufzeichnungsgerät (2) und das Prüfgerät (4) einen Zufallsgenerator (6) zur Generierung eines Zufallscodes als ein eine Verbindungsidentifikationskennung umfassender Verbindungscode für eine Kurzstreckenfunkverbindung (8) zwischen dem Fahrzeugdatenaufzeichnungsgerät (2) und dem Prüfgerät (4) aufweist,
- **dass** das den Zufallscode generierende Gerät der Geräte Fahrzeugdatenaufzeichnungsgerät (2) und Prüfgerät (4) eine Ausgabeeinrichtung (10) für den Zufallscode aufweist und
- **dass** das den Zufallscode nicht-generierende Gerät eine Eingabevorrichtung (12) für den Zufallscode aufweist.

8. System nach Anspruch 7, **dadurch gekennzeichnet, dass** die Ausgabeeinrichtung (10) eine optische Anzeigevorrichtung und/oder einen Lautsprecher und/oder einen Drucker aufweist.

9. System nach Anspruch 7 oder 8, **dadurch gekennzeichnet, dass** die Eingabevorrichtung (12) eine Tastatur und/oder ein Mikrofon aufweist.

## Claims

1. Method for transmitting control data between a vehicle data recording device (2) arranged in a motor vehicle (1) and a test device (4) arranged outside the motor vehicle, wherein the control data comprise driver data and are stored in the vehicle data recording device,
**characterized**
- **in that** a random code is generated by the vehicle data recording device (2) or by the test device (4) as a connection code comprising a connection identification identifier,
- **in that** the random code is indicated by the device generating the random code,
- **in that** the random code indicated is detected and input into the device not generating the random code,
- **in that** after the random code has been input into the device not generating the random code, coupling is effected automatically via a short-distance radio link (8) between the device not generating the random code and the device generating the random code,
- **in that** subsequently the control data are transmitted by the vehicle data recording device (2) to the test device (4) via the short-distance radio link (8),
- **in that** after the control data transmission has ended, the short-distance radio link (8) between the vehicle data recording device (2) and the test device (4) is separated and
- **in that** subsequently the random code is deleted in the vehicle data recording device (2) and in the test device (4),
wherein a device identification identifier is permanently allocated to the vehicle data recording device (2) and wherein the device identification identifier is transmitted by radio to the test device (4) for setting up the short-distance radio link (8) before the random code is generated, and wherein, after the short-distance radio link (8) is separated, the device identification identifier is deleted in the test device (4).

2. Method according to Claim 1, **characterized in that** the random code has two code components, one of the code components comprising a device identifier of the device generating the random code and the other code component comprising the connection identification identifier.

3. Method according to one of the preceding claims, **characterized in that** the random code is indicated optically and/or acoustically by the device generating the random code.

4. Method according to Claim 3, **characterized in that** the optical indication of the random code is effected by a printout of the random code by means of a printer.

5. Method according to one of the preceding claims, **characterized in that** the random code is input manually and/or acoustically into the device not generating the random code.

6. Method according to one of the preceding claims, **characterized in that** in the case of a non-error-free control data transmission, a new random code is first generated before another control data transmission.

7. System for performing a method according to one of the preceding claims comprising a vehicle data recording device (2) arranged in a motor vehicle (1) and a test device (4) arranged outside the motor vehicle,
**characterized**
- **in that** the vehicle data recording device (2) and the test device (4) has a random generator (6) for generating a random code as a connection code, comprising a connection identification identifier, for a short-distance radio link (8) between the vehicle data recording device (2) and the test device (4),
- **in that** the device generating the random code, out of the devices vehicle data recording device (2) and test device (4), has an output device (10) for the random code and
- **in that** the device not generating the random code has an input device (12) for the random code.

8. System according to Claim 7, **characterized in that** the output device (10) has an optical display device and/or a loudspeaker and/or a printer.

9. System according to Claim 7 or 8, **characterized in that** the input device (12) has a keyboard and/or a microphone.

## Revendications

1. Procédé de transmission de données de contrôle entre un appareil d'enregistrement de données de véhicule (2) disposé dans un véhicule automobile (1) et un appareil de test (4) disposé à l'extérieur du véhicule automobile, les données de contrôle comprenant des données de conducteur et étant stockées dans l'appareil d'enregistrement de données de véhicule, **caractérisé**
- **en ce qu'**un code aléatoire est généré par l'appareil d'enregistrement de données de véhicule (2) ou par l'appareil de test (4) en tant que code de connexion comprenant une caractéristique d'identification de connexion,
- **en ce que** le code aléatoire est affiché par l'appareil générant le code aléatoire,
- **en ce que** le code aléatoire affiché est saisi et entré dans l'appareil ne générant pas le code aléatoire,
- **en ce que**, après l'entrée du code aléatoire dans l'appareil ne générant pas le code aléatoire, il s'effectue automatiquement un couplage par le biais d'une connexion radio à courte portée (8) entre l'appareil ne générant pas le code aléatoire et l'appareil générant le code aléatoire,
- **en ce que**, ensuite, les données de contrôle sont transmises à partir de l'appareil d'enregistrement de données de véhicule (2) vers l'appareil de test (4) par le biais de la connexion radio à courte portée (8),
- **en ce que**, une fois terminée la transmission de données de contrôle, la connexion radio à courte portée (8) entre l'appareil d'enregistrement de données de véhicule (2) et le compartiment intérieur (4) est coupée et
- **en ce que**, ensuite, le code aléatoire est effacé dans l'appareil d'enregistrement de données de véhicule (2) et dans l'appareil de test (4),
une caractéristique d'identification d'appareil est affectée de façon fixe à l'appareil d'enregistrement de données de véhicule (2), et la caractéristique d'identification d'appareil étant, avant la génération du code aléatoire, transmise par radio à l'appareil de test (4) en vue d'un établissement de la connexion radio à courte portée (8) et, après la coupure de la connexion radio à courte portée (8), la caractéristique d'identification d'appareil est effacée dans l'appareil de test (4).

2. Procédé selon la revendication 1, **caractérisé en ce que** le code aléatoire présente deux composantes de code, l'une des composantes de code comprenant une caractéristique d'appareil de l'appareil générant le code aléatoire, et l'autre composante de code comprenant la caractéristique d'identification de connexion.

3. Procédé selon l'une des revendications précédentes, **caractérisé en ce que** le code aléatoire est affiché optiquement et/ou signalé acoustiquement par l'appareil générant le code aléatoire.

4. Procédé selon la revendication 3, **caractérisé en ce que** l'affichage optique du code aléatoire s'effectue par une impression du code aléatoire au moyen d'une imprimante.

5. Procédé selon l'une des revendications précédentes, **caractérisé en ce que** le code aléatoire est entré manuellement et/ou acoustiquement dans l'appareil ne générant pas le code aléatoire.

6. Procédé selon l'une des revendications précédentes, **caractérisé en ce que**, en présence d'une transmission de données de contrôle non exempte d'erreur, un nouveau code aléatoire est généré avant une nouvelle transmission de données de contrôle.

7. Système destiné à la réalisation d'un procédé selon l'une des revendications précédentes avec un appareil d'enregistrement de données de véhicule (2) disposé dans un véhicule automobile (1) et un appareil de test (4) disposé à l'extérieur du véhicule automobile, **caractérisé**
- **en ce que** l'appareil d'enregistrement de données de véhicule (2) et l'appareil de test (4) présentent un générateur aléatoire (6) destiné à la génération d'un code aléatoire en tant que code de connexion comprenant une caractéristique d'identification de connexion pour une connexion radio à courte portée (8) entre l'appareil d'enregistrement de données de véhicule (2) et l'appareil de test (4),
- **en ce que** l'appareil générant le code aléatoire des appareils, à savoir l'appareil d'enregistrement de données de véhicule (2) et l'appareil de test (4), présente un équipement de sortie (10) pour le code aléatoire et
- **en ce que** l'appareil ne générant pas le code aléatoire présente un dispositif d'entrée (12) pour le code aléatoire.

8. Système selon la revendication 7, **caractérisé en ce que** l'équipement de sortie (10) présente un dispositif d'affichage optique et/ou un haut-parleur et/ou une imprimante.

9. Système selon la revendication 7 ou 8, **caractérisé en ce que** le dispositif d'entrée (12) présente un clavier et/ou un microphone.
